# EUROPÄISCHE PATENTSCHRIFT

(11) **EP 1 597 100 B1**
(45) Veröffentlichungstag und Bekanntmachung des Hinweises auf die Patenterteilung: **06.02.2008**
(21) Anmeldenummer: 04709606.0
(22) Anmeldetag: 10.02.2004
(51) Int. Cl.: B60J 3/02

(54) **VORRICHTUNG ZUR ARRETIERUNG, KÖRPER UND ANORDNUNG MIT EINER SOLCHEN VORRICHTUNG**
DEVICE FOR ARRESTING, BODY AND ARRANGEMENT COMPRISING SUCH A DEVICE
DISPOSITIF D'ARRET, CORPS ET SYSTEME MUNIS D'UN TEL DISPOSITIF

(30) Priorität: 17.02.2003 DE 10306733
(43) Veröffentlichungstag der Anmeldung: 23.11.2005
(73) Patentinhaber: Johnson Controls Interiors GmbH & Co. KG, 42285 Wuppertal (DE)
(72) Erfinder: SELVINI, Frédéric, 57550 Falck (FR); WELTER, Patrick, 57730 Lachambre (FR)
(74) Vertreter: Brosch, Oliver
(86) Internationale Anmeldenummer: PCT/EP2004/001203
(87) Internationale Veröffentlichungsnummer: WO 2004/071796

(56) Entgegenhaltungen:
- GB-A- 1 422 368
- US-A- 3 378 297
- US-A- 5 007 622
- US-A- 5 338 083

## Beschreibung

Die Erfindung betrifft eine Vorrichtung zur Arretierung nach dem in der US 5338083 A offenbarten Oberbegriff des Anspruchs 1. Die Vorrichtung ist erfindungsgemäß insbesondere zur Arretierung eines insbesondere als Sonnenblende vorgesehenen Körpers vorgesehen. Solche Sonnenblenden sind in heutigen Kraftfahrzeugen eingebaut und deshalb allgemein bekannt. Der Sonnenblendkörper ist dabei drehbar um eine Drehachse gelagert. Damit der Körper in unterschiedlichen Winkelstellungen um die Drehachse herum arretiert werden kann, dient eine mit dem Sonnenblendkörper verbundene und damit ebenfalls um die Drehachse drehbare Feder dazu, eine Kraft auf die Mantelfläche der Drehachse auszuüben, die zu einem Widerstand gegen eine weitere Drehung führt. In einer besonders ausgezeichneten Winkelposition des Körpers ist durch insbesondere eine Abflachung auf der ansonsten eine zylindrische bzw. zylinderförmige Mantelfläche aufweisenden Drehachse eine besonders gute Arretierung des Körpers vorgesehen.

Beispielsweise aus der deutschen Offenlegungsschrift DE 198 35 963 A1 ist eine solche Sonnenblende bekannt. Zum Halten des Sonnenblendkörpers in seiner jeweiligen Winkelposition auf der Drehachse dient eine mit zwei Schenkeln über die Achse greifende, drehfest im Sonnenblendkörper angeordnete Klemmfeder, welche in Nichtgebrauchsstellung des Sonnenblendkörpers mit einem Schenkel auf der Abflachung aufliegt und mit ihrem anderen Schenkel gegen die Mantelfläche der Achse anliegt. Hierbei ist es nachteilig, dass zumindest Teile der Klemmfeder - insbesondere deren äußerstes Ende - in manchen Positionen des Körpers im Bereich der Drehachse relativ weit von dieser Drehachse bzw. von der Mantelfläche der Drehachse entfernt angeordnet sind. Dies ist insofern nachteilig, als dass die mechanischen Teile zur Arretierung des Sonnenblendkörpers im allgemeinen in eine Kuststoffmatrix oder auch eine Kunststoffumhüllung eingebettet und somit von außen unsichtbar sind. Um die Beständigkeit der Kunststoffumhüllung - die im Folgenden auch kurz als Umhüllung bezeichnet wird - zu erhöhen, ist es notwendig, sie mit einer ausreichenden Mindestdicke des Materials auszustatten. Dies ist im Bereich der Drehachse und insbesondere auf der dem Hauptteil des Körpers gegenüberliegenden Teil des Körpers ("am oberen Ende der Sonnenblende") deshalb schwierig, weil eine größere Materialdicke der Umhüllung auch einen größeren Abstand der Drehachse beispielsweise von der Fahrzeuginnenraumverkleidung erfordert. Somit führen durch weit von der Drehachse abstehende und zur Arretierung der Sonnenblende notwendige Teile zu erhöhtem Platzbedarf, erhöhtem Gewicht und damit höheren Kosten für eine solche Komponente.

Der Erfindung liegt daher die Aufgabe zugrunde, eine Vorrichtung zur Arretierung eines drehbaren Körpers zu schaffen, bei der - insbesondere im den Abstand zur Fahrzeuginnenraumverkleidung bestimmenden Bereich der Drehachse - weit von der Drehachse abstehende Bereiche der zur mechanischen Arretierung vorgesehenen Bauteile vermieden werden.

Diese Aufgabe wird erfindungsgemäß durch die Merkmale des unabhängigen Anspruchs 1 gelöst. Vorzugsweise liegt die Vorrichtung außerhalb des Bereichs des Spaltes zumindest in einer der Winkelstellungen relativ zur Drehachse an der ersten und einer zweiten Teilfläche der Mantelfläche im wesentlichen vollständig an. Dadurch ist gewährleistet, dass im Bereich der Drehachse am "oberen Ende" des Körpers keine weit abstehenden Teile zur Arretierung des Körpers notwendig sind. In einer bevorzugten Ausführungsform weist die erfindungsgemäße Vorrichtung ein Basiselement auf, wobei das Basiselement mit der ersten Teilfläche der Mantelfläche zur Bewirkung einer besonders guten Arretierung des Körpers in der ersten Winkelstellung zusammenwirkt. Dies hat den Vorteil, dass die Nichtgebrauchsstellung des Sonnenschutzes besonders stabil eingenommen und gehalten wird. Weiterhin hat dies den Vorteil, dass das Basiselement unten flach vorgesehen ist, so dass deshalb unterhalb des Basiselements und damit in unmittelbarer Nähe der Drehachse Platz, beispielsweise zur Unterbringung eines Kosmetik- oder Rückspiegels, zur Verfügung steht, der bei weit in den Körper hineinragender Vorrichtung im "klemmenden" bzw. arretierenden Bereich der Drehachse nicht zur Verfügung stehen würde.

Weiterhin ist es bei einer bevorzugten Ausgestaltung der erfindungsgemäßen Vorrichtung vorgesehen, dass das wenigstens eine Federelement ausgehend von dem Basiselement in einer ersten Biegerichtung um die Mantelfläche der Drehachse herum diese weitgehend umschließt und dass weiterhin ein weiteres Federelement ausgehend von der anderen Seite des Basiselements in einer zweiten Biegerichtung um die Mantelfläche der Drehachse herum diese weitgehend umschließt, wobei die erste und zweite Biegerichtung entgegengesetzt sind. Weiterhin ist es bei einer bevorzugten Ausgestaltung der erfindungsgemäßen Vorrichtung vorgesehen, dass die Vorrichtung relativ zum Körper in Bezug auf die Drehachse axialer Richtung verschiebbar ist. Dadurch ist es möglich, eine Sonnenblende vorzusehen, die nicht nur drehbar sondern auch längs der Drehachse verschiebbar ist. Dies ist mit der erfindungsgemäßen Vorrichtung besonders kostengünstig möglich.

Ein weiterer Gegenstand der vorliegenden Erfindung ist ein Körper, insbesondere ein Sonnenblendkörper zur Verwendung in einem Fahrzeug, der eine erfindungsgemäße Vorrichtung umfasst. Ein solcher Körper umfasst in der Regel ein Drahtrahmen und ist mit einer Umhüllung - im Folgenden auch als Ausschäumung bezeichnet - versehen, die beispielsweise aus EPP - Expandiertes Polypropylen - vorgesehen ist. Dabei wird der Drahtrahmen mit der erfindungsgemäßen Vorrichtung verbunden und in eine Form zur Herstellung der Umhüllung gelegt. In die Form wird das Umhüllungsmaterial eingebracht und die Umhüllung durch Druck- und Temperatureinwirkung in die vorgesehene Form gebracht. Hierbei ist es wichtig, dass die Umhüllung möglichst an allen Stellen, insbesondere jedoch an besonders strapazierten Stellen wie beispielsweise im Bereich der Drehachse, eine ausreichende Mindestdicke aufweist.

Ein weiterer Gegenstand der vorliegenden Erfindung ist eine Anordnung zur Arretierung eines erfindungsgemäßen Körpers, wobei die Anordnung eine erfindungsgemäße Vorrichtung und den erfindungsgemäßen Körper zusammen mit der Drehachse umfasst, wobei die erste Teilfläche der Mantelfläche der Drehachse unrund oder abgeflacht vorgesehen ist. Vorteilhafterweise ist die zweite Teilfläche im wesentlichen zylinderförmig vorgesehen. Dies hat den Vorteil, dass die Drehachse besonders einfach und kostengünstig herstellbar vorgesehen ist.

Die Erfindung wird nachfolgend anhand von in der Zeichnung dargestellten Ausführungsbeispielen näher erläutert. Es zeigen
Figur 1 eine erfindungsgemäße Vorrichtung mit einer darin eingeführten Drehachse in Seitenansicht,
Figur 2 eine Drehachse in Seitenansicht mit einer ersten Schnittlinie und einer zweiten Schnittlinie,
Figur 3 eine Schnittdarstellung der erfindungsgemäßen Vorrichtung und die angedeutete Drehachse,
Figur 4 eine Schnittdarstellung der Drehachse entlang der ersten Schnittlinie aus Figur 2,
Figur 5 eine Schnittdarstellung der Drehachse entlang der zweiten Schnittlinie aus Figur 2,
Figur 6 eine perspektivische Darstellung der erfindungsgemäßen Vorrichtung und Figur 7 eine schematische Darstellung des erfindungsgemäßen Körpers bzw. der erfindungsgemäßen Anordnung.

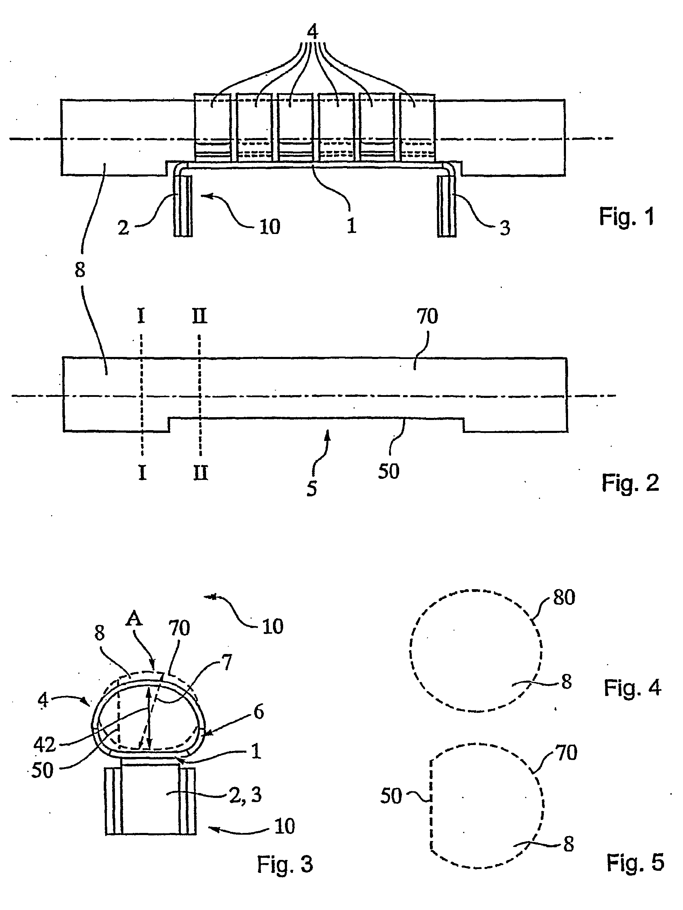

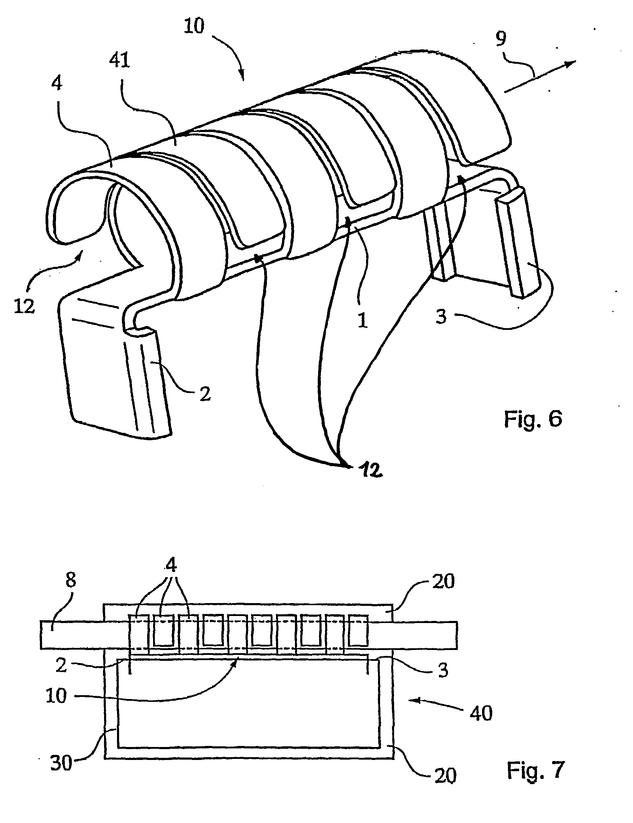

In Figur 1 ist eine erfindungsgemäße Vorrichtung 10 mit einer darin eingeführten Drehachse 8 in Seitenansicht dargestellt. Die Vorrichtung 10 weist ein Basiselement 1 auf, das im wesentlichen als längliches flaches Bauteil, insbesondere als Metallblech, vorgesehen ist und welches an seinen Enden abgebogene Teilbereiche aufweist, die mit den Bezugszeichen 2 und 3 bezeichnet sind. Ausgehend vom Basiselement 1 der Vorrichtung 10 sind in Figur 1 insgesamt sechs Federelemente 4 angeordnet. Die Federelemente 4 umgreifen die Drehachse 8 ausgehend vom Basiselement 1. Hierbei sind die Federelemente 4 entlang der Drehachse 8, d.h. von links nach rechts in Figur 1, abwechselnd an unterschiedlichen Seiten des Basiselements 1 relativ zur axialen Erstreckung des Basiselements 1 mit dem Basiselement 1 verbunden. Das Basiselement 1, seine beiden abgewinkelten Teilbereiche 2, 3 und die Federelemente 4 sind erfindungsgemäß insbesondere einstückig vorgesehen und bilden zusammen die erfindungsgemäße Vorrichtung 10. Diese ist in Figur 6 in einer perspektivischen Darstellung dargestellt. Der Einfachheit halber ist in Figur 6 lediglich eines der Federelemente 4 mit dem Bezugszeichen 4 versehen, ein anderes zur besseren Differenzierung mit dem Bezugszeichen 41. Entlang einer Richtung, die in Figur 6 durch einen mit dem Bezugszeichen 9 versehenen Pfeil angedeutet ist und die der axialen Erstreckung des Basiselements 1 entspricht, ist zunächst das mit dem Bezugszeichen 4 bezeichnete Federelement ausgehend - in Richtung 9 gesehen- von der rechten Seite des Basiselements 1 in einer Biegerichtung entgegen dem Uhrzeigersinn über das Basiselement 1 hinweg auf seine linke Seite hin gemäß einer speziellen Kurve gekrümmt gebogen und es ist das mit dem Bezugszeichen 41 bezeichnete weitere Federelement ausgehend von der linken Seite des Basiselements 1 in einer Biegerichtung im Uhrzeigersinn über das Basiselement 1 hinweg auf seine rechte Seite hin gemäß einer speziellen Kurve gekrümmt gebogen. Hierbei ist die Biegung der Federelemente 4, 41 jedoch nicht so vollständig, dass die Federelemente 4, 41 auf der jeweils gegenüberliegenden ihrer Ausgangsseiten das Basiselement 1 wieder berührten, sondern es ist ein Spalt 12 vorgesehen zwischen dem Basiselement 1 und jedem der Federelemente 4, 41. Hierdurch sind die Enden der Federelemente 4, 41 in Figur 6 frei und damit in der Lage, eine Rückstellkraft auszuüben, falls sie aus ihrer Ruheposition ausgelenkt werden. Der Spalt 12 entspricht in der Ruheposition der Federelemente 4, 41 beispielsweise einer Öffnung von 20°. Der Spalt ist erfindungsgemäß deshalb vorhanden, weil die Federelemente 4, 41, die bei ihrer Herstellung in der Regel ausgehend von gestanzten Blechteilen plastisch verformt werden, nach dem Biegevorgang zu Ihrer Herstellung elastisch ein Stück zurückfedern.

In Figur 2 ist die Drehachse 8 in Seitenansicht mit einer ersten Schnittlinie I - I und einer zweiten Schnittlinie II - II dargestellt. Die Drehachse 8 weist im Bereich der ersten Schnittlinie insbesondere einen kreisförmigen Querschnitt auf, wie dies in Figur 4, die eine Schnittdarstellung der Drehachse 8 entlang der ersten Schnittlinie I - I darstellt, gezeigt ist. Die Mantelfläche der Drehachse 8 ist im Bereich der ersten Schnittlinie I - I in Figur 4 mit dem Bezugszeichen 80 bezeichnet. In Figur 2 weist die Drehachse 8 im Bereich der zweiten Schnittlinie eine Ausnehmung 5 auf, die beispielsweise als Fläche oder abgeflachter bzw. unrunder Bereich der Drehachse 8 vorgesehen ist. Durch die Ausnehmung 5 teilt sich die Mantelfläche der Drehachse 8 im Bereich der zweiten Schnittlinie II - II, d.h. im Bereich der Ausnehmung 5, in eine erste Teilfläche 50 der Mantelfläche und in eine zweite Teilfläche 70 der Mantelfläche auf. Zur besseren Verdeutlichung des abgeflachten bzw. unrunden Bereichs der Drehachse 8 ist in Figur 5 in einer Schnittdarstellung die Drehachse 8 entlang der zweiten Schnittlinie II - II mit ihrem ersten Teilbereich 50 der Mantelfläche und ihrem zweiten Teilbereich 70 der Mantelfläche der Drehachse 8 dargestellt.

In Figur 3 ist eine Schnittdarstellung der erfindungsgemäßen Vorrichtung 10 im Bereich eines Federelements 4 sowie die mit einer gestrichelten Linie angedeutete Drehachse 8 dargestellt. Die Vorrichtung 10 umfasst wiederum die vom Basiselement 1 abgewinkelten Teilbereiche 2, 3 sowie die Federelemente 4. In Figur 3 sind zwei der Federelemente 4 übereinanderprojiziert dargestellt. Jedes Federelement 4 ist gemäß einer speziellen Kurve ausgehend von einer Seite des Basiselements 1 in jeweils seiner Biegerichtung - im Uhrzeigersinn oder entgegen den Uhrzeigersinn - über das Basiselement 1 hin gebogen, wobei jedoch in Figur 3 der bei Figur 6 beschriebene Spalt 12 zwischen dem freien Ende eines Federelements 4 und der seiner Ausgangsseite am Basiselement 1 gegenüberliegenden Seite der Übersichtlichkeit halber nicht dargestellt ist. Die spezielle Kurve der Biegung bzw. Krümmung der Federelemente 4 ist derart vorgesehen, dass die mit dem Bezugszeichen 42 bezeichnete "lichte" Strecke zwischen dem Basiselement 1 und der mit dem Bezugszeichen A bezeichneten "höchsten" Stelle - d.h. gegenüber dem Basiselement 1 liegend - eines Federelements 4 kleiner ist als der Durchmesser 7 der Drehachse 8. Hierdurch kommt es bei zwischen dem Basiselement 1 und den Federelementen 4 befindlicher - d.h. in die Vorrichtung 10 eingeführter - Drehachse 8 zu einer Auslenkung der Federelemente 4 und somit zu einer in Figur 3 nicht dargestellten Rückstellkraft der Federelemente 4, die die Drehachse 8 gegen das Basiselement 1 drückt. Die Drehachse 8 wird in die Vorrichtung 10 beispielsweise mittels eines in den Figuren nicht dargestellten und am vorderen Ende der Drehachse 8 befindlichen Konusses eingeführt, der bewirkt, dass sich die Federelemente 4 zum Einführen der Drehachse 8 entsprechend aufweiten. In Figur 3 sind weiterhin die ersten und zweiten Teilflächen 50, 70 dargestellt. Die spezielle Kurve der Biegung der Federelemente 4 ist derart gewählt, dass die in die Vorrichtung 10 eingeführte Drehachse 8 in jede Winkelposition relativ zur Vorrichtung 10 drehbar ist, ohne zu blockieren. Daher ist insbesondere eine Stellung der ersten Teilfläche 50 in Berühungskontakt zum Basiselement 1 möglich. Diese Winkelstellung wird im Folgenden auch als erste Winkelstellung bezeichnet. In diesem Fall liegt die Vorrichtung 10 - zumindest außerhalb des Bereichs des Spaltes 12 - mit ihrem Basiselement 1 und wenigstens einem der Federelemente 4 an beiden Teilflächen 50, 70 der Mantelfläche im wesentlichen vollständig an. Die Federelemente 4 sind in diesem Fall weniger stark ausgelenkt, weil in den Bereich der Strecke 42 - d.h. zwischen das Basiselement 1 und den höchsten Punkt A eines Federelements 4 - nicht der gesamte Durchmesser 7 der Drehachse 8, sondern nur der Durchmesser 7 abzüglich der aus Figur 2 bekannten und dort mit dem Bezugszeichen 5 bezeichneten Ausnehmung der Drehachse 8 Platz finden muss. Aufgrund der geringeren Federauslenkung der Federelemente 4 in der ersten Winkelstellung führt jede Änderung dieser Stellung zu einer stärkeren Auslenkung der Federelemente 4, so dass für eine solche Änderung eine größere Kraft aufzubringen ist als für eine Änderung der Winkelstellung ausgehend von einer anderen Winkelstellung. Für jede Winkelstellung - d.h. insbesondere solche, bei denen das Basiselement 1 mit der zweiten Teilfläche 70 der Mantelfläche in Kontakt steht - ist es aber so, dass die erfindungsgemäße Vorrichtung 10 mit ihren Federelementen 4 die Drehachse 8 und damit die Teilbereiche 50, 70 der Mantelfläche bis auf den Spalt 12 im wesentlichen vollständig umschließt. Eine solche andere Winkelstellung wird im folgenden auch allgemein als zweite Winkelstellung bezeichnet. Zwischen der ersten und zweiten Winkelstellung findet eine "Auf-und-ab-Bewegung" der Federelemente 4 statt. Hierbei verändert sich natürlich die Größe des Spalts 12.

Die Anzahl der Federelemente 4 ist grundsätzlich gleichgültig. Eine Umfassung der Drehachse 8 von beiden Seiten des Basiselements 1 erhöht die Stabilität der Drehachse 8 in der Vorrichtung 10, jedoch ist auch ein einzelnes Federelement 4 erfindungsgemäß möglich. Weiterhin ist es erfindungsgemäß vorgesehen, die spezielle Kurve der Biegung eines Federelements 4 dafür vorzusehen, mit der ersten Teilfläche 50 zusammenzuwirken. Dadurch ist es möglich, in weiteren Winkelstellungen als der ersten Winkelstellung eine besonders gute Arretierung des Körpers zu gewährleisten. Dies wird beispielsweise durch einen nicht dargestellten abgeflachten Teilbereich der speziellen Kurve eines Federelements 4 realisiert.

In Figur 7 ist eine schematische Darstellung des erfindungsgemäßen Körpers 20 bzw. der erfindungsgemäßen Anordnung 40 dargestellt. Der Körper 20 umfasst einen Drahtrahmen 30, der mit der Vorrichtung 10 verbunden ist. Diese Verbindung ist erfindungsgemäß insbesondere über die abgewinkelten bzw. gebogenen Bereiche 2, 3 der erfindungsgemäßen Vorrichtung 10 vorgesehen, welche garantieren, dass die Vorrichtung 10 mit dem Körper 20 mechanisch drehfest miteinander verbunden sind. Der Drahtrahmen 30 und die Vorrichtung 10 werden zusammen mit einer Kunststoffumhüllung umgeben bzw. ausgeschäumt. Die Kunststoffumhüllung ist in Figur 7 nicht eigens mit einem Bezugszeichen dargestellt, jedoch umfasst der Körper 20 im wesentlichen und insbesondere hinsichtlich seiner äußeren Abmessungen die Kunststoffumhüllung. Die erfindungsgemäße Anordnung 40 umfasst außer dem erfindungsgemäßen Körper noch die montierte Drehachse 8, die in Figur 7 ebenfalls angedeutet ist. Weiterhin sind die Federelemente 4 in Figur 7 angedeutet.

### Bezugszeichenliste

- 1: Basiselement
- 2, 3: abgewinkelte Teilbereiche
- 4: Federelemente
- 5: Ausnehmung
- 7: Durchmesser der Drehachse
- 8: Drehachse
- 9: Richtung der axialen Erstreckung des Basiselements
- 10: Vorrichtung
- 12: Spalt
- 20: Körper
- 30: Drahtrahmen
- 40: Anordnung
- 41: Federelemente
- 42: Strecke
- 50: erste Teilfläche
- 70: zweite Teilfläche
- 80: Mantelfläche

## Patentansprüche

1. Vorrichtung (10) zur Arretierung eines um eine eine Mantelfläche aufweisende Drehachse (8) drehbaren Körpers (20), wobei der Körper (20) in einer ersten Winkelstellung und in einer zweiten Winkelstellung relativ zur Drehachse (8) einstellbar vorgesehen ist, wobei der Körper (20) bezüglich einer Drehung um die Drehachse (8) in der ersten Winkelstellung mittels wenigstens einer ersten Teilfläche (50) der Mantelfläche stärker arretierbar vorgesehen ist als in der zweiten Winkelstellung, wobei die Vorrichtung (10) und der Körper (20) mechanisch drehfest miteinander verbunden vorgesehen sind, wobei die Vorrichtung (10) wenigstens ein Federelement (4) aufweist, **dadurch gekennzeichnet, dass** die Vorrichtung außer dem wenigstens einen Federelement wenigstens ein weiteres Federelement (41) aufweist, wobei die Vorrichtung (10) mittels ihrer Federelemente (4,41) und eines Basiselements (1) die Mantelfläche (80) bis auf jeweils einen Spalt (12) zwischen jedem Federelement und dem Basiselement im wesentlichen vollständig umschließt, und wobei das wenigstens eine Federelement (4) und das wenigstens eine weitere Federelement (41) an unterschiedlichen Seiten des Basiselements (1) relativ zur axialen Erstreckung des Basiselements (1) entlang der Drehachse (8) mit dem Basiselement (1) verbunden sind.

2. Vorrichtung (10) nach Anspruch 1, **dadurch gekennzeichnet, dass** die Mantelfläche (80) eine zweite Teilfläche (70) aufweist, wobei die Vorrichtung (10) außerhalb des Bereichs des Spaltes (12) zumindest in einer der Winkelstellungen relativ zur Drehachse (8) an beiden Teilflächen (50, 70) der Mantelfläche im wesentlichen vollständig anliegt.

3. Vorrichtung (10) nach einem der vorhergehenden Ansprüche, **dadurch gekennzeichnet, dass** die Vorrichtung (10) außer dem wenigstens einen Federelement (4) ein Basiselement (1) aufweist, wobei das Basiselement (1) in der ersten Winkelstellung des Körpers (20) mit der ersten Teilfläche (50) der Mantelfläche zur im Vergleich mit der zweiten Winkelstellung.des Körpers (20) relativ stärkeren Arretierung des Körpers (20) zusammenwirkt.

4. Vorrichtung (10) nach einem der vorhergehenden Ansprüche, **dadurch gekennzeichnet, dass** das wenigstens eine Federelement (4) die Mantelfläche bis auf den Spalt (12) in einer ersten Biegerichtung im wesentlichen vollständig umschließt und wobei das wenigstens eine weitere Federelement (41) die Mantelfläche bis auf den Spalt (12) in einer zweiten, zur ersten Drehrichtung entgegengesetzten Biegerichtung im wesentlichen vollständig umschließt.

5. Vorrichtung (10) nach Anspruch 4, **dadurch gekennzeichnet, dass** die Vorrichtung (10) eine Mehrzahl von Federelementen (4) umfasst, wobei die Federelemente (4) entlang der axialen Erstreckung des Basiselements (1) parallel zur Drehachse (8) die Mantelfläche abwechselnd in der ersten und in der zweiten Biegerichtung umschließen.

6. Vorrichtung (10) nach Anspruch 5, **dadurch gekennzeichnet, dass** die Mehrzahl von Federelementen (4) entlang der axialen Erstreckung des Basiselements (1) parallel zur Drehachse (8) abwechselnd an unterschiedlichen Seiten des Basiselements (1) mit dem Basiselement (1) verbunden sind.

7. Vorrichtung (10) nach einem der vorhergehenden Ansprüche, **dadurch gekennzeichnet, dass** die Vorrichtung (10) und der Körper (20) mechanisch derart miteinander verbunden vorgesehen sind, dass die Vorrichtung (10) relativ zum Körper (20) in in Bezug auf die Drehachse (8) axialer Richtung verschiebbar ist.

8. Vorrichtung (10) nach einem der vorhergehenden Ansprüche, **dadurch gekennzeichnet, dass** das Basiselement (1) und das wenigstens eine Federelement (4) einstückig miteinander verbunden sind.

9. Vorrichtung (10) nach einem der vorhergehenden Ansprüche, **dadurch gekennzeichnet, dass** die Vorrichtung (10) aus einem Metall oder einer Legierung, insbesondere Stahl, besteht.

10. Körper (20) mit einer Vorrichtung (10) nach einem der vorhergehenden Ansprüchen, **dadurch gekennzeichnet, dass** der Körper (20) ein Drahtrahmen (30) umfasst, wobei die Vorrichtung (10) mit dem Drahtrahmen (30) verbunden ist.

11. Körper (20) nach Anspruch 10, **dadurch gekennzeichnet, dass** der Körper (20) eine Ausschäumung umfasst, wobei die Ausschäumung den Drahtrahmen (30) und die Vorrichtung (10) im wesentlichen vollständig umgibt.

12. Körper (20) nach Anspruch 10 oder 11, **dadurch gekennzeichnet, dass** die Ausschäumung als EPP-Ausschäumung (expanded polypropylen) vorgesehen ist.

13. Körper (20) nach Anspruch 10, 11 oder 12, **dadurch gekennzeichnet, dass** der Körper (20) als Sonnenblende, insbesondere für ein Fahrzeug, vorgesehen ist.

14. Anordnung (40) zur Arretierung eines Körpers (20), wobei die Anordnung (40) eine Vorrichtung (10) nach einem der Ansprüchen 1 bis 9 umfasst, wobei die Anordnung (40) weiterhin den Körper (20) und die Drehachse (8) umfasst, wobei die erste Teilfläche (50) der Mantelfläche der Drehachse (8) unrund oder abgeflacht vorgesehen ist.

15. Anordnung (40) nach Anspruch 14, **dadurch gekennzeichnet, dass** die zweite Teilfläche (70) im wesentlichen zylinderförmig vorgesehen ist.

16. Verwendung einer Vorrichtung (10) nach einem der Ansprüche 1 bis 9 zur Arretierung eines Körpers (20) nach einem der Ansprüche 11 bis 13.

## Claims

1. Device (10) for arresting a body (20) which is rotatable around a spindle (8) having a lateral surface, the body (20) being settable in a first angular position and in a second angular position relative to the spindle (8), the body (20) being, with regard to rotation around the spindle (8), arrestable more strongly in the first angular position by means of at least one first part surface (50) of the lateral surface than in the second angular position, the device (10) and the body (20) being mechanically non-rotationally interconnected, the device (10) comprising at least one spring element (4), **characterized in that** the device comprises at least one further spring element (41) in addition to the at least one spring element, the device (10) surrounding the lateral surface (80) essentially completely except for a gap (12) in each case between each spring element and a base element by means of its spring elements (4, 41) and the base element (1), and wherein the at least one spring element (4) and the at least one further spring element (41) are connected to the base element (1) along the spindle (8) on different sides of the base element (1) relative to the axial extension of the base element (1).

2. Device (10) according to Claim 1, **characterized in that** the lateral surface (80) has a second part surface (70), the device (10) bearing, outside the region of the gap (12), essentially completely against Lhe two part surfaces (50, 70) of the lateral surface at least in one of the angular positions relative to the spindle (8).

3. Device (10) according to one of the preceding claims, **characterized in that** the device (10) comprises a base element (1) in addition to the at least one spring element (4), the base element (1) interacting with the first part surface (50) of the lateral surface in the first angular position of the body (20) for relatively stronger arresting of the body (20) in comparison with the second angular position of the body (20).

4. Device (10) according to one of the preceding claims, **characterized in that** the at least one spring element (4) surrounds the lateral surface essentially completely in a first bending direction except for the gap (12), and wherein the at least one further spring element (41) surrounds the lateral surface essentially completely in a second bending direction opposite to the first bending direction except for the gap (12).

5. Device (10) according to Claim 4, **characterized in that** the device (10) comprises a plurality of spring elements (4), the spring elements (4) surrounding the lateral surface alternately in the first and in the second bending direction along the axial extension of the base element (1) parallel to the spindle (8).

6. Device (10) according to Claim 5, **characterized in that** the plurality of spring elements (4) are connected to the base element (1) alternately on different sides of the base element (1) along the axial extension of the base element (1) parallel to the spindle (8).

7. Device (10) according to one of the preceding claims, **characterized in that** the device (10) and the body (20) are mechanically interconnected in such a way that the device (10) is displaceable relative to the body (20) in the axial direction in relation to the spindle (8).

8. Device (10) according to one of the preceding claims, **characterized in that** the base element (1) and the at least one spring element (4) are interconnected in one piece.

9. Device (10) according to one of the preceding claims, **characterized in that** the device (10) is made of a metal or an alloy, in particular steel.

10. Body (20) with a device (10) according to one of the preceding claims, **characterized in that** the body (20) comprises a wire frame (30), the device (10) being connected to the wire frame (30).

11. Body (20) according to Claim 10, **characterized in that** the body (20) comprises a foamed covering, the foamed covering surrounding the wire frame (30) and the device (10) essentially completely.

12. Body (20) according to Claim 10 or 11, **characterized in that** the foamed covering is provided in the form of an EPP (expanded polypropylene) foamed covering.

13. Body (20) according to Claim 10, 11 or 12, **characterized in that** the body (20) is provided in the form of a sun visor, in particular for a vehicle.

14. Arrangement (40) for arresting a body (20), the arrangement (40) comprising a device (10) according to one of Claims 1 to 9, the arrangement (40) also comprising the body (20) and the spindle (8), the first part surface (50) of the lateral surface of the spindle (8) being non-round or flattened.

15. Arrangement (40) according to Claim 14, **characterized in that** the second part surface (70) is essentially cylindrical.

16. Use of a device (10) according to one of Claims 1 to 9 for arresting a body (20) according to one of Claims 11 to 13.

## Revendications

1. Dispositif (10) pour arrêter un corps (20) tournant autour d'un axe de rotation (8) présentant une surface latérale, dans lequel il est prévu que le corps (20) soit réglable dans une première position angulaire et dans une deuxième position angulaire par rapport à l'axe de rotation (8), dans lequel il est prévu que le corps (20) puisse être arrêté plus fortement dans la première position angulaire au moyen d'au moins une surface partielle (50) de la surface latérale que dans la deuxième position angulaire, par rapport à une rotation autour de l'axe de rotation (8), dans lequel il est prévu que le dispositif (10) et le corps (20) soient mécaniquement solidaires en rotation l'un de l'autre, dans lequel le dispositif (10) comprend au moins un élément de ressort (4), **caractérisé en ce que** le dispositif comprend au moins un autre élément de ressort (41) en plus de l'au moins un élément de ressort, dans lequel le dispositif (10) entoure de manière essentiellement complète, au moyen de ses éléments de ressort (4, 41) et d'un élément de base (1), la surface latérale (80) chaque fois jusqu'à une fente (12) entre chaque élément de ressort et l'élément de base, et dans lequel l'au moins un élément de ressort (4) et l'au moins un autre élément de ressort (41) sont assemblés à l'élément de base (1) sur des côtés différents de l'élément de base (1) par rapport à l'extension axiale de l'élément de base (1) le long de l'axe de rotation (8).

2. Dispositif (10) selon la revendication 1, **caractérisé en ce que** la surface latérale (80) comprend une deuxième surface partielle (70), dans lequel le dispositif (10) s'applique de manière essentiellement complète sur les deux surfaces partielles (50, 70) de la surface latérale, au moins dans une des positions angulaires par rapport à l'axe de rotation (8), à l'extérieur de la région de la fente (12).

3. Dispositif (10) selon l'une quelconque des revendications précédentes, **caractérisé en ce que** le dispositif (10) comprend un élément de base (1) en plus de l'au moins un élément de ressort (4), dans lequel l'élément de base (1) coopère, dans la première position angulaire du corps (20), avec la première surface partielle (50) de la surface latérale pour arrêter le corps (20) relativement plus fortement que dans la deuxième position angulaire du corps (20).

4. Dispositif (10) selon l'une quelconque des revendications précédentes, **caractérisé en ce que** l'au moins un élément de ressort (4) entoure de manière essentiellement complète la surface latérale jusqu'à la fente (12) dans une première direction de flexion et dans lequel l'au moins un autre élément de ressort (41) entoure de manière essentiellement complète la surface latérale jusqu'à la fente (12) dans une deuxième direction de flexion opposée à la première direction de rotation.

5. Dispositif (10) selon la revendication 4, **caractérisé en ce que** le dispositif (10) comprend une pluralité d'éléments de ressort (4), dans lequel les éléments de ressort (4) entourent la surface latérale en alternant dans la première et la deuxième directions de flexion le long de l'extension axiale de l'élément de base (1) parallèle à l'axe de rotation (8).

6. Dispositif (10) selon la revendication 5, **caractérisé en ce que** la pluralité d'éléments de ressort (4) sont assemblés à l'élément de base (1), en alternance sur des côtés différents de l'élément de base (1), le long de l'extension axiale de l'élément de base (1) parallèle à l'axe de rotation (8).

7. Dispositif (10) selon l'une quelconque des revendications précédentes, **caractérisé en ce qu'**il est prévu que le dispositif (10) et le corps (20) soient reliés mécaniquement l'un à l'autre, de telle manière que le dispositif (10) puisse coulisser par rapport au corps (20) dans une direction axiale par rapport à l'axe de rotation (8).

8. Dispositif (10) selon l'une quelconque des revendications précédentes, **caractérisé en ce que** l'élément de base (1) et l'au moins un autre élément de ressort (4) sont assemblés l'un à l'autre en une seule pièce.

9. Dispositif (10) selon l'une quelconque des revendications précédentes, **caractérisé en ce que** le dispositif (10) est constitué d'un métal ou d'un alliage, en particulier d'acier.

10. Corps (20) avec un dispositif (10) selon l'une quelconque des revendications précédentes, **caractérisé en ce que** le corps (20) comprend un cadre de fils (30), dans lequel le dispositif (10) est relié au cadre de fils (30).

11. Corps (20) selon la revendication 10, **caractérisé en ce que** le corps (20) comprend une partie en mousse, dans lequel la partie en mousse enrobe de manière essentiellement complète le cadre de fils (30) et le dispositif (10).

12. Corps (20) selon la revendication 10 ou 11, **caractérisé en ce que** la partie en mousse est une partie en mousse de PPE (polypropylène expansé).

13. Corps (20) selon la revendication 10, 11 ou 12, **caractérisé en ce que** le corps (20) est un écran pare-soleil, en particulier pour un véhicule.

14. Système (40) pour arrêter un corps (20), dans lequel le système (40) comprend un dispositif (10) selon l'une quelconque des revendications 1 à 9, dans lequel le système (40) comprend en outre le corps (20) et l'axe de rotation (8), dans lequel il est prévu que la première surface partielle (50) de la surface latérale de l'axe de rotation (8) ne soit pas ronde ou soit aplatie.

15. Système (40) selon la revendication 14, **caractérisé en ce que** la deuxième surface partielle (70) est essentiellement cylindrique.

16. Utilisation d'un dispositif (10) selon l'une quelconque des revendications 1 à 9 pour arrêter un corps (20) selon l'une quelconque des revendications 11 à 13.
